# FASCICULE DE BREVET EUROPEEN

(11) **EP 2 221 200 B1**
(45) Date de publication et mention de la délivrance du brevet: **13.07.2011**
(21) Numéro de dépôt: 10153464.2
(22) Date de dépôt: 12.02.2010
(51) Int. Cl.: B60H 1/32

(54) **Dispositif logeant un échangeur de chaleur, une zone d'accumulation et un filtre à gaz**
Vorrichtung umfassend einen Wärmetauscher, Sammler, und Gasfilter
Appliance including a heat exchanger, an accumulator and a gas filter

(30) Priorité: 17.02.2009 FR 0900710
(43) Date de publication de la demande: 25.08.2010
(73) Titulaire: Valeo Systèmes Thermiques, 78321 Le Mesnil Saint Denis (FR)
(72) Inventeur: Lemee, Jimmy, 72380, Saint Jean d'Asse (FR); Denoual, Christophe, 72430, Noyen sur Sarthe (FR); Pourmarin, Alain, 72210, La Suze sur Sarthe (FR)
(74) Mandataire: Léveillé, Christophe

(56) Documents cités:
- EP-A- 1 707 411
- EP-A- 1 961 597
- DE-A1-102006 011 416
- DE-A1-102007 015 185

## Description

### Domaine technique de l'invention.

La présente invention est du domaine des boucles de climatisation coopérant avec une installation de ventilation, de chauffage et/ou de climatisation d'un véhicule automobile. Elle a pour objet un dispositif comprenant un échangeur de chaleur interne et un accumulateur. Elle a aussi pour objet une boucle de climatisation comprenant un tel dispositif.

### Etat de la technique.

Un véhicule automobile est couramment équipé d'une installation de ventilation, de chauffage et/ou de climatisation pour réguler les paramètres aérothermiques de l'air contenu à l'intérieur de l'habitacle du véhicule. L'installation est principalement constituée d'un boîtier en matière plastique qui est logé sous une planche de bord du véhicule. Le boîtier canalise la circulation d'au moins un flux d'air préalablement à la délivrance de ce dernier à l'intérieur de l'habitacle.

Une telle installation coopère avec une boucle de climatisation pour refroidir le flux d'air préalablement à l'évacuation de ce dernier hors du boîtier vers l'habitacle. La boucle de climatisation comprend une pluralité d'éléments, tels qu'au moins un compresseur, un refroidisseur de gaz, un échangeur de chaleur interne, un organe de détente, un évaporateur et un accumulateur.

A l'intérieur des éléments de la boucle de climatisation, circule un fluide constitué d'un mélange d'un fluide réfrigérant, tel qu'un fluide supercritique, dioxyde de carbone connu sous la référence R744 notamment, et d'une huile de lubrification du compresseur.

Le fluide circule depuis le compresseur vers le refroidisseur de gaz, puis au travers d'une branche « haute pression » de l'échangeur de chaleur interne, puis vers l'organe de détente, ensuite au travers de l'évaporateur, puis vers l'accumulateur, et enfin au travers d'une branche « basse pression » de l'échangeur de chaleur interne, pour retourner au compresseur.

Le compresseur est destiné à recevoir le fluide réfrigérant à l'état gazeux et à le comprimer pour le porter à haute pression. Le refroidisseur de gaz est apte à refroidir le fluide réfrigérant comprimé, à pression relativement constante, en cédant de la chaleur à son environnement. L'organe de détente est à même d'abaisser la pression du fluide réfrigérant sortant du refroidisseur de gaz en l'amenant au moins en partie à l'état liquide. L'évaporateur est quant à lui propre à faire passer à l'état gazeux le fluide réfrigérant à l'état liquide provenant de l'organe de détente, à pression relativement constante, en prélevant de la chaleur audit flux d'air qui traverse l'évaporateur.

L'accumulateur assure une fonction de séparation entre d'une part une phase gazeuse du fluide réfrigérant, et d'autre part une phase liquide du fluide réfrigérant et l'huile de lubrification. A cette fin, l'accumulateur comporte une zone de séparation à l'intérieur de laquelle lesdites phases et ladite huile se dissocient par gravité.

L'accumulateur assure aussi une fonction de stockage d'une charge circulante de fluide réfrigérant et/ou d'huile de lubrification en fonction des conditions d'utilisation de la boucle de climatisation. Pour cela, l'accumulateur comporte une zone d'accumulation du fluide réfrigérant à l'état liquide et/ou de l'huile de lubrification que la zone d'accumulation recueille simultanément en provenance de la zone de séparation.

Dans sa généralité, l'accumulateur est constitué d'une enceinte logeant la zone de séparation et la zone d'accumulation, la zone de séparation surplombant la zone d'accumulation. L'enceinte comprend une cloison inférieure qui délimite la zone d'accumulation en partie basse de l'enceinte et une cloison supérieure qui délimite la zone de séparation en partie haute de l'enceinte.

Le dispositif est qualifié de dispositif combiné dès lors que l'échangeur de chaleur est installé à l'intérieur de l'enceinte, sous la zone de séparation et sensiblement dans la zone d'accumulation.

Le fluide réfrigérant à basse pression et l'huile de lubrification en provenance de l'évaporateur pénètrent à l'intérieur de la partie haute de l'enceinte pour être admis à l'intérieur de la zone de séparation. Le fluide réfrigérant se dissocie en phase gazeuse et en phase liquide à l'intérieur de la zone de séparation. L'huile de lubrification et le fluide réfrigérant à l'état liquide chutent depuis la zone de séparation vers la zone d'accumulation. La densité de l'huile de lubrification étant supérieure à celle du fluide réfrigérant à l'état liquide, ladite huile tend à s'accumuler directement au-dessus de la cloison inférieure en une couche inférieure de ladite zone d'accumulation, tandis que le fluide réfrigérant à l'état liquide tend à surnager au-dessus de ladite huile et à s'accumuler en une couche supérieure de ladite zone d'accumulation.

Un tel dispositif est connu du document EP 1 961 597A, qui est considéré comme l'art antérieur le plus proche.

Un tel dispositif présente un premier inconvénient qui réside dans le fait qu'il n'est pas prévu de moyen de filtration de la phase gazeuse du fluide réfrigérant circulant dans le dispositif selon l'invention.

Un tel dispositif présente un second inconvénient qui réside dans le fait que la pureté et la qualité du fluide réfrigérant à basse pression, qui est évacué hors du dispositif pour être admis à l'intérieur du compresseur, mérite d'être amélioré pour optimiser la pérennité et l'efficacité du compresseur, et en conséquence optimiser aussi la pérennité et l'efficacité de la boucle de climatisation.

Un tel dispositif présente enfin un troisième inconvénient qui réside dans le fait que l'agencement des entrées et sorties de fluide réfrigérant d'un tel dispositif combiné à la présence d'un filtre à gaz ne permet pas une intégration aisée dudit dispositif sur une boucle de climatisation de conformation relativement quelconque.

### Objet de l'invention.

Un premier but de la présente invention est de proposer un dispositif compacte associant un échangeur de chaleur interne et un accumulateur participant d'une boucle de climatisation coopérant avec une installation de ventilation, de chauffage et/ou de climatisation d'un véhicule automobile, ledit dispositif étant agencé pour éviter des détériorations susceptibles d'affecter un compresseur que comporte la boucle de climatisation, tout en minimisant des pertes de charge susceptibles d'affecter un fluide réfrigérant circulant à l'intérieur dudit dispositif.

Un deuxième but de la présente invention est de proposer une boucle de climatisation comprenant un tel dispositif, l'agencement de ce dernier facilitant son intégration sur la boucle de climatisation dans certaines conformations de cette dernière pour améliorer le coefficient de performance « COP » de la dite boucle.

Le dispositif comprend une enceinte logeant un échangeur de chaleur interne et une zone d'accumulation. L'enceinte loge un filtre à gaz.

Le filtre à gaz jouxte préférentiellement l'échangeur de chaleur interne.

Le filtre à gaz est notamment logé à l'intérieur d'un volume additionnel ménagé entre l'échangeur de chaleur interne et la cloison inférieure de l'enceinte. L'encombrement dans la dimension orthogonale à une direction générale d'extension du dispositif reste limité puisque le filtre est sous l'échangeur de chaleur. L'impacte négatif de l'intégration du filtre sur le diamètre (quand celui-ci est globalement cylindrique) du dispositif est inexistant ce qui facilite l'intégration du dispositif selon l'invention dans un compartiment moteur d'un véhicule actuel.

De préférence, le filtre à gaz est principalement constitué d'un treillis comportant une surface de passage libre SPL et une surface totale ST.

Le treillis comporte notamment un rapport R entre la surface totale ST et la surface de passage libre SPL qui est compris entre 2,8 et 3,2.

Le rapport R est préférentiellement égal à 3.

La surface de passage libre SPL est par exemple comprise entre 8 cm² et 12 cm².

La surface de passage libre SPL est notamment égale à 10 cm².

Le treillis comporte avantageusement une maille qui est comprise entre 40 µm et 60 µm.

La maille du treillis est préférentiellement égale à 50 µm.

Une boucle de climatisation de la présente invention est principalement reconnaissable en ce que la boucle de climatisation comprend un tel dispositif.

Le filtre à gaz est avantageusement disposé sur un chemin de circulation « basse pression » qui comprend une branche « basse pression » de l'échangeur de chaleur interne et une zone de séparation d'un fluide réfrigérant à l'état gazeux FRG et d'un fluide réfrigérant à l'état liquide FRL.

### Description des figures.

La présente invention sera mieux comprise, et des détails en relevant apparaîtront, à la lecture de la description qui va être faite de variantes de réalisation en relation avec les figures des planches annexées, dans lesquelles :
La fig.1 est une illustration schématique d'une boucle de climatisation comprenant un dispositif selon la présente invention.
La fig.2 est une illustration schématique en coupe du dispositif représenté sur la figure précédente.
La fig.3 est une illustration schématique en vue de dessus d'un filtre à gaz dont est pourvu le dispositif représenté sur les figures précédentes.

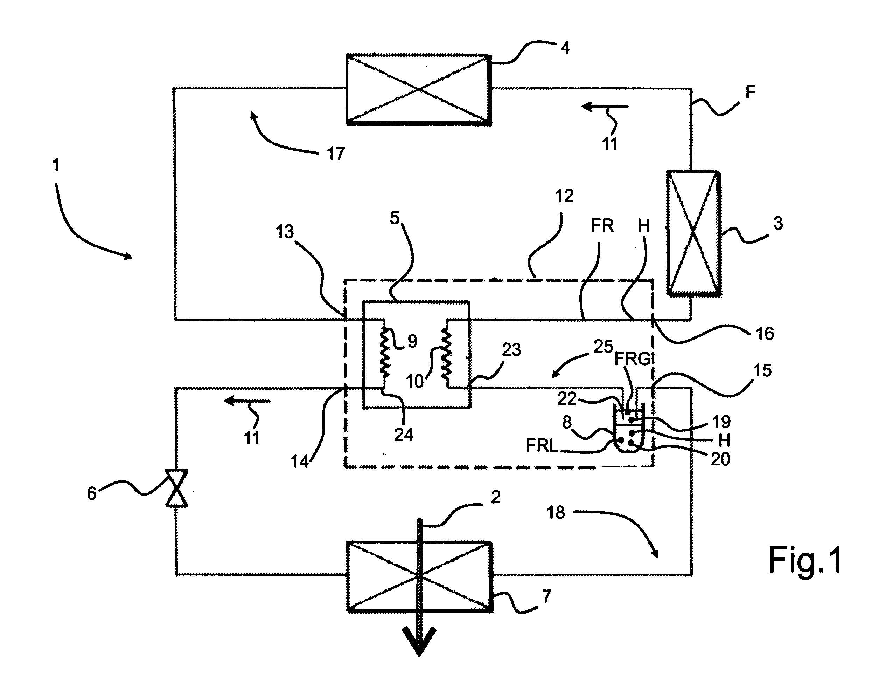

Sur la fig.1, une installation de ventilation, de chauffage et/ou de climatisation équipant un véhicule automobile coopère avec une boucle de climatisation 1 pour refroidir un flux d'air 2 préalablement à la délivrance de ce dernier à l'intérieur de l'habitacle du véhicule. La boucle de climatisation 1 comprend un compresseur 3, un refroidisseur de gaz 4, un échangeur de chaleur interne 5, un organe de détente 6, un évaporateur 7 et un accumulateur 8 à l'intérieur desquels circule un fluide F. Ce dernier est constitué d'un mélange d'un fluide réfrigérant FR, tel qu'un fluide supercritique, dioxyde de carbone connu sous la référence R744 notamment et d'une huile de lubrification H. Celle-ci est ajoutée au fluide réfrigérant FR pour pérenniser le fonctionnement du compresseur 3.

Le fluide F circule depuis le compresseur 3 vers le refroidisseur de gaz 4, puis au travers d'une branche « haute pression » 9 de l'échangeur de chaleur interne 5, puis vers l'organe de détente 6, ensuite au travers de l'évaporateur 7, puis vers l'accumulateur 8, et enfin au travers d'une branche « basse pression » 10 de l'échangeur de chaleur interne 5, pour retourner au compresseur 3. Ces dispositions visent à permettre un échange de chaleur entre le fluide réfrigérant FR circulant à haute pression et à haute température à l'intérieur de ladite branche « haute pression » 9 et le fluide réfrigérant FR circulant à basse pression et à basse température à l'intérieur de ladite branche « basse pression » 10. Il en résulte une amélioration d'un coefficient de performance « COP » de la boucle de climatisation 1.

La boucle de climatisation 1 comprend une ligne « haute pression » 17 qui débute en sortie du compresseur 3 et se termine en entrée de l'organe de détente 6, selon un sens de circulation 11 du fluide réfrigérant FR à l'intérieur de la boucle de climatisation 1, le refroidisseur de gaz 4 et la branche « haute pression » 9 de l'échangeur de chaleur interne 5 étant interposés entre ces deux points.

La boucle de climatisation 1 comprend aussi une ligne « basse pression » 18 qui débute en sortie de l'organe de détente 6 et se termine en entrée du compresseur 3, selon le sens de circulation 11 du fluide réfrigérant FR à l'intérieur de la boucle de climatisation 1, l'évaporateur 7, l'accumulateur 8 et la branche « basse pression » 10 de l'échangeur de chaleur interne 5 étant interposés entre ces deux points.

L'accumulateur 8, disposé en aval de l'évaporateur 7 selon le sens de circulation 11 du fluide réfrigérant FR à l'intérieur de la boucle de climatisation 1, permet une séparation d'une phase gazeuse FRG et d'une phase liquide FRL du fluide réfrigérant FR en provenance de l'évaporateur 7 et un stockage d'un reliquat de fluide réfrigérant à l'état liquide FRL et d'huile de lubrification H. A cette fin, l'accumulateur 8 comporte une zone de séparation 19 de la phase gazeuse FRG et de la phase liquide FRL et une zone d'accumulation 20 de la phase liquide FRL.

L'échangeur de chaleur interne 5 et l'accumulateur 8 sont associés en un dispositif 12 formant un ensemble monobloc assurant conjointement les fonctions de l'échangeur de chaleur interne 5 et de l'accumulateur 8. Les caractères combiné et monobloc dudit dispositif 12 permettent à l'échangeur de chaleur interne 5 et à l'accumulateur 8 d'être installés simultanément sur la boucle de climatisation 1, l'échangeur de chaleur interne 5 et l'accumulateur 8 formant un ensemble intégré. Ceci a pour effet de se dispenser d'une conduite installée dans le compartiment moteur du véhicule, entre une sortie 22 de l'accumulateur 8 et une entrée 23 de la branche « basse pression » 10 de l'échangeur de chaleur interne 5.

Le dispositif 12 comporte une entrée « haute pression » 13 à travers laquelle le fluide réfrigérant FR en provenance du refroidisseur de gaz 4 est admis à l'intérieur du dispositif 12. Le dispositif 12 comporte aussi une sortie « haute pression » 14 à travers laquelle le fluide réfrigérant FR à haute pression est évacué hors du dispositif 12 vers l'organe de détente 6. L'entrée « haute pression » 13 et la sortie « haute pression » 14 sont reliées l'une à l'autre par l'intermédiaire d'un chemin de circulation « haute pression » 24 qui comprend la branche « haute pression » 9.

Le dispositif 12 comporte aussi une entrée « basse pression » 15 à travers laquelle le fluide réfrigérant FR en provenance de l'évaporateur 7 est admis à l'intérieur du dispositif 12. Le dispositif 12 comporte enfin une sortie « basse pression » 16 à travers laquelle le fluide réfrigérant FR à l'état gazeux et à basse pression est évacué hors du dispositif 12 vers le compresseur 3. L'entrée « basse pression » 15 et la sortie « basse pression » 16 sont reliées l'une à l'autre par l'intermédiaire d'un chemin de circulation « basse pression » 25 qui comprend la branche « basse pression » 10 de l'échangeur de chaleur interne 5 et la zone de séparation 19.

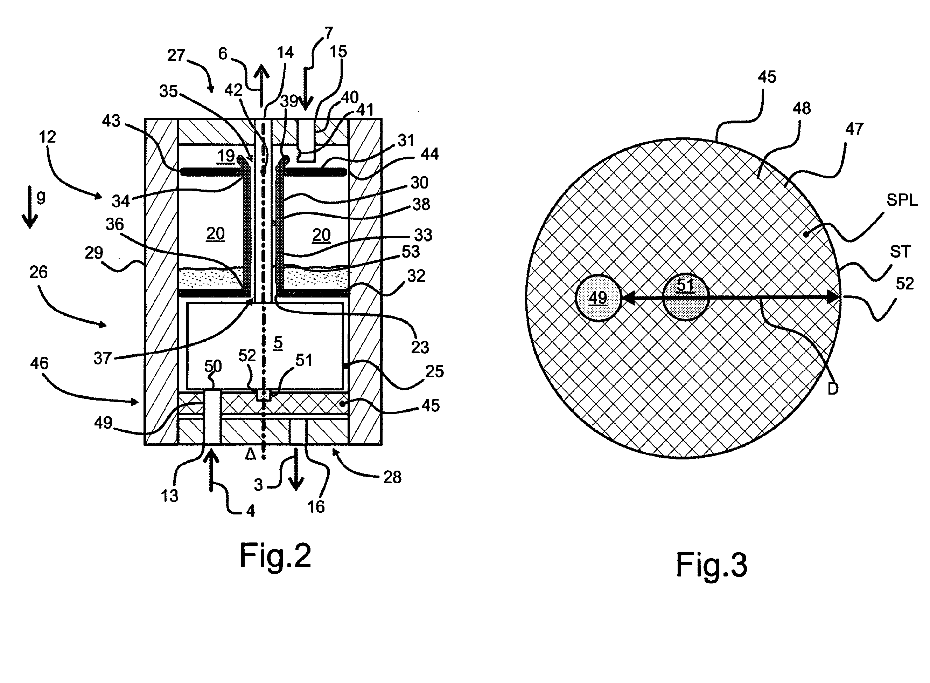

Sur la fig.2, le dispositif 12 comprend une enceinte 26 qui est constituée d'une cloison supérieure 27, d'une cloison inférieure 28 et d'au moins une paroi latérale 29. Cette dernière est notamment conformée en un tube allongé dont les extrémités sont obturées par un couvercle supérieur formant la cloison supérieure 27 et un couvercle inférieur formant la cloison inférieure 28. L'enceinte 26 loge l'échangeur de chaleur interne 5, la zone de séparation 19 et la zone d'accumulation 20.

L'enceinte 26 loge un composant interne monobloc 30 qui est formé d'une paroi de délimitation 31 de la zone de séparation 19 et de la zone d'accumulation 20, d'une paroi de confinement 32 de l'échangeur de chaleur interne 5 par rapport à la zone d'accumulation 20, et d'un conduit 33 qui relie la paroi de confinement 32 et la paroi de délimitation 31.

La paroi de délimitation 31 isole partiellement l'une de l'autre la zone de séparation 19 et la zone d'accumulation 20. La paroi de délimitation 31 est interposée entre la zone de séparation 19 et la zone d'accumulation 20.

La paroi de confinement 32 isole l'un de l'autre la zone d'accumulation 20 et l'échangeur de chaleur 5. Ce dernier est interposé entre la paroi de confinement 32 et la cloison inférieure 28. Il en ressort que la zone d'accumulation 20 est elle-même interposée entre la paroi de délimitation 31 et la paroi de confinement 32.

Le conduit 33 est interposé entre la paroi de délimitation 31 et la paroi de confinement en s'étendant à l'intérieur de la zone d'accumulation 20. Le conduit 33 comporte une première extrémité 34 équipée d'une première ouverture 35 qui est ménagée à travers la paroi de délimitation 31 et une deuxième extrémité 36 équipée d'une deuxième ouverture 37 qui est ménagée à travers la paroi de confinement 32. Le conduit 33 délimite un volume interne 38 qui est en communication aéraulique avec la zone de séparation 19 par l'intermédiaire de la première ouverture 35 et avec l'échangeur de chaleur interne 5 par l'intermédiaire de la deuxième ouverture 37. Ces dispositions sont telles que le volume interne 38 du conduit 33 constitue un passage du fluide réfrigérant à l'état gazeux depuis la zone de séparation 19 vers l'entrée 23 de la branche « basse pression » 10 de l'échangeur de chaleur interne 5.

La paroi de délimitation 31 est munie d'une collerette 39 qui est ménagée autour de la première ouverture 35 en étant évasée depuis la paroi de délimitation 31 vers la zone de séparation 19. Ces dispositions visent à faciliter une admission du fluide réfrigérant à l'état gazeux à l'intérieur du volume interne 38 du conduit 33 et à empêcher une admission du fluide réfrigérant à l'état liquide à l'intérieur dudit volume interne 38. Il en résulte finalement que le fluide réfrigérant en provenance de l'évaporateur 7 se scinde par effet cyclonique en gaz et en liquide suite à son admission à l'intérieur de la zone de séparation 19 par l'intermédiaire d'une buse 40 équipant l'entrée « basse pression » 15 du dispositif 12. La buse 40 est par exemple conformée en un cylindre muni d'un orifice tangentiel 41 pour faciliter ladite scission entre le fluide réfrigérant à l'état liquide et le fluide réfrigérant à l'état gazeux FRG. Le fluide réfrigérant à l'état liquide FRL tend à chuter par gravité depuis la buse 40 jusque sur la paroi de délimitation 31 tandis que le fluide réfrigérant à l'état gazeux FRG se disperse à l'intérieur de la zone de séparation 19 jusqu'à notamment pénétrer à l'intérieur dudit volume interne 38.

La paroi de délimitation 31 est conformée en un disque dont un centre 42 est muni de la première ouverture 35 et dont un rebord 43 est pourvu d'ergots 44 de positionnement de la paroi de délimitation 31 contre la paroi latérale 29 de l'enceinte 26.

Pour éviter que le fluide réfrigérant à l'état gazeux FRG véhicule des impuretés, telles que des poussières, des résidus métalliques ou analogue, la présente invention propose de pourvoir le chemin de circulation « basse pression » 25 du dispositif 12 d'un filtre à gaz 45. Plus particulièrement, le filtre à gaz 45 est contigu à l'échangeur de chaleur 5, il jouxte donc ce dernier en ce sens que le filtre à gaz et l'échangeur de chaleur interne sont directement face à face et proche l'un de l'autre, tout en laissant une espace libre entre ledit échangeur et la face du filtre à gaz de sorte à arroser l'intégralité de cette face avec le fluide réfrigérant. Plus précisément encore, le filtre à gaz 45 est interposé entre l'échangeur de chaleur interne 5 et la cloison inférieure 28 de l'enceinte 26.

Il en ressort que le filtre à gaz est logé à l'intérieur d'un volume additionnel 46 de l'enceinte 26, le volume additionnel 46 étant disposé sous l'échangeur de chaleur interne 5 et au-dessus de la cloison inférieure 28 de l'enceinte 26, selon un axe d'extension général Δ du dispositif 12. Les termes « au-dessus » et « en-dessous » sont à comprendre au regard d'une position d'utilisation du dispositif 12 dans laquelle selon l'axe de gravité g la zone d'accumulation 20 surplombe l'échangeur de chaleur 5, et la zone de séparation 19 surplombe la zone d'accumulation 20.

Dans sa généralité, et en se reportant sur la fig.3, le filtre à gaz 45 est principalement constitué d'un treillis 47 comportant une surface de passage libre SPL et une surface totale ST. La surface de passage SPL est définie comme la somme de l'ensemble des surfaces de passage du fluide réfrigérant à l'état gazeux FRG entre des mailles 48 du treillis 47. La surface totale ST quant à elle est définie comme la surface globale du filtre à gaz 45 prise perpendiculairement au sens d'écoulement du fluide réfrigérant à l'état gazeux FRG à travers le filtre à gaz 45.

Le filtre à gaz 45 présente un rapport R, défini comme le rapport de la surface totale ST par la surface de passage libre SPL qui est de l'ordre de 3. Ainsi, la surface de passage libre SPL est par exemple de l'ordre de 10 cm² tandis que la surface totale ST est de l'ordre de 30 cm². Ces caractéristiques sont notamment obtenues à partir d'un treillis comportant une maille de l'ordre de 50 µm.

Dans le cas courant où l'échangeur de chaleur interne 5 est un échangeur à spirales comprenant une première spirale à l'intérieur de laquelle circule le fluide réfrigérant à haute pression et une deuxième spirale à l'intérieur de laquelle circule le fluide réfrigérant à basse pression, le filtre à gaz 45 comporte un orifice 49 pour le passage à son travers d'un collecteur d'entrée haute pression 50 qui relie l'entrée « haute pression » 13 à l'échangeur de chaleur interne 5. De même, le filtre à gaz 45 comporte un évidement 51 pour la réception d'un bouchon inférieur 52 équipant un collecteur de sortie haute pression 53 de l'échangeur de chaleur interne 5.

L'ensemble de ces dispositions est telle que le dispositif 12 présente une importante flexibilité au regard du choix du positionnement de la sortie « basse pression » 16 sur la cloison inférieure 28. En effet, le fait que le filtre à gaz 45 s'étende sur toute la surface du dispositif 12 délimitée par la paroi latérale 29, préférentiellement circulaire, la sortie « basse pression » 16 est susceptible d'être placée en un endroit relativement quelconque d'un débattement D qui s'étend entre l'orifice 49 et un bord 52 diamétralement opposé à l'orifice 49.

Ces dispositions sont telles que le dispositif 12 présente une compacité optimisée notamment selon un plan orthogonal à l'axe d'extension générale Δ du dispositif 12.

## Revendications

1. Dispositif (12) destiné à être installé sur une boucle de climatisation (1) coopérant avec une installation de ventilation, de chauffage et/ou de climatisation d'un véhicule automobile, le dispositif (12) comprenant une enceinte (26) logeant un échangeur de chaleur interne (5) et une zone d'accumulation (20), **caractérisé en ce que** l'enceinte (26) loge un filtre à gaz (45).

2. Dispositif (12) selon la revendication précédente, **caractérisé en ce que** le filtre à gaz (45) jouxte l'échangeur de chaleur interne (5).

3. Dispositif (12) selon la revendication 2, **caractérisé en ce que** le filtre à gaz (45) est logé à l'intérieur d'un volume additionnel (46) ménagé entre l'échangeur de chaleur interne (5) et une cloison inférieure (28) de l'enceinte (26).

4. Dispositif (12) selon l'une quelconque des revendications précédentes, **caractérisé en ce que** le filtre à gaz (45) est principalement constitué d'un treillis (47) comportant une surface de passage libre SPL et une surface totale ST.

5. Dispositif (12) selon la revendication 4, **caractérisé en ce que** le treillis (47) comporte un rapport R entre la surface totale ST et la surface de passage libre SPL qui est compris entre 2,8 et 3,2.

6. Dispositif (12) selon la revendication 5, **caractérisé en ce que** le rapport R est égal à 3.

7. Dispositif (12) selon l'une quelconque des revendications 5 et 6, **caractérisé en ce que** la surface de passage libre SPL est comprise entre 8 cm² et 12 cm².

8. Dispositif (12) selon la revendication 7, **caractérisé en ce que** la surface de passage libre SPL est égale à 10 cm².

9. Dispositif (12) selon l'une quelconque des revendications 4 à 8, **caractérisé en ce que** le treillis (47) comporte une maille (48) qui est comprise entre 40 µm et 60 µm.

10. Dispositif (12) selon la revendication 9, **caractérisé en ce que** la maille (48) du treillis (47) est égale à 50 µm.

11. Boucle de climatisation (1) comprenant un dispositif (12) selon l'une quelconque des revendications précédentes.

12. Boucle de climatisation (1) selon la revendication 11, **caractérisée en ce que** le filtre à gaz (45) est disposé sur un chemin de circulation « basse pression » (25) qui comprend une branche « basse pression » (10) de l'échangeur de chaleur interne (5) et une zone de séparation (19) d'un fluide réfrigérant à l'état gazeux FRG et d'un fluide réfrigérant à l'état liquide FRL.

## Claims

1. Device (12) intended to be installed on an air-conditioning loop (1) cooperating with a ventilation, heating and/or air-conditioning unit for a motor vehicle, the device (12) comprising an enclosure (26) housing an internal heat exchanger (5) and an accumulation zone (20), **characterized in that** the enclosure (26) houses a gas filter (45).

2. Device (12) according to the preceding claim, **characterized in that** the gas filter (45) is next to the internal heat exchanger (5).

3. Device (12) according to Claim 2, **characterized in that** the gas filter (45) is housed inside an additional volume (46) provided between the internal heat exchanger (5) and a lower partition (28) of the enclosure (26).

4. Device (12) according to any one of the preceding claims, **characterized in that** the gas filter (45) consists mainly of a trellis (47) having a free-flow area SPL and a total area ST.

5. Device (12) according to Claim 4, **characterized in that** the ratio R of the total area ST to the free-flow area SPL of the trellis (47) is between 2.8 and 3.2.

6. Device (12) according to Claim 5, **characterized in that** the ratio R is equal to 3.

7. Device (12) according to either of Claims 5 and 6, **characterized in that** the free-flow area SPL is between 8 cm² and 12 cm².

8. Device (12) according to Claim 7, **characterized in that** the free-flow area SPL is equal to 10 cm².

9. Device (12) according to any one of Claims 4 to 8, **characterized in that** the trellis (47) comprises a mesh (48) which is between 40 µm and 60 µm.

10. Device (12) according to Claim 9, **characterized in that** the mesh (48) of the trellis (47) is equal to 50 µm.

11. Air-conditioning loop (1) comprising a device (12) according to any one of the preceding claims.

12. Air-conditioning loop (1) according to Claim 11, **characterized in that** the gas filter (45) is placed in a "low-pressure" flow path (25) that includes a "low-pressure" leg (10) of the internal heat exchanger (5) and a separating zone (19) where a refrigerant in the gaseous state FRG separates from a refrigerant in the liquid state FRL.

## Patentansprüche

1. Vorrichtung (12), die dazu bestimmt ist, in einen Klimatisierungskreislauf (1) eingebaut zu werden, der mit einer Lüftung-, Heiz- und/oder Klimatisierungsanlage eines Kraftfahrzeugs zusammenwirkt, wobei die Vorrichtung (12) einen Raum (26) enthält, in dem ein innerer Wärmetauscher (5) und eine Speicherzone (20) untergebracht sind, **dadurch gekennzeichnet, dass** ein Gasfilter (45) im Raum (26) untergebracht ist.

2. Vorrichtung (12) nach dem vorhergehenden Anspruch, **dadurch gekennzeichnet, dass** der Gasfilter (45) an den inneren Wärmetauscher (5) angrenzt.

3. Vorrichtung (12) nach Anspruch 2, **dadurch gekennzeichnet, dass** der Gasfilter (45) im Inneren eines zusätzlichen Volumens (46) untergebracht ist, das zwischen dem inneren Wärmetauscher (5) und einer unteren Trennwand (28) des Raums (26) angeordnet ist.

4. Vorrichtung (12) nach einem der vorhergehenden Ansprüche, **dadurch gekennzeichnet, dass** der Gasfilter (45) hauptsächlich aus einem Gitter (47) besteht, das eine freie Durchgangsfläche SPL und eine Gesamtfläche ST aufweist.

5. Vorrichtung (12) nach Anspruch 4, **dadurch gekennzeichnet, dass** das Gitter (47) ein Verhältnis R zwischen der Gesamtfläche ST und der freien Durchgangsfläche SPL aufweist, das zwischen 2,8 und 3,2 liegt.

6. Vorrichtung (12) nach Anspruch 5, **dadurch gekennzeichnet, dass** das Verhältnis R gleich 3 ist.

7. Vorrichtung (12) nach einem der Ansprüche 5 und 6, **dadurch gekennzeichnet, dass** die freie Durchgangsfläche SPL zwischen 8 cm² und 12 cm² liegt.

8. Vorrichtung (12) nach Anspruch 7, **dadurch gekennzeichnet, dass** die freie Durchgangsfläche SPL gleich 10 cm² ist.

9. Vorrichtung (12) nach einem der Ansprüche 4 bis 8, **dadurch gekennzeichnet, dass** das Gitter (47) eine Masche (48) aufweist, die zwischen 40 µm und 60 µm liegt.

10. Vorrichtung (12) nach Anspruch 9, **dadurch gekennzeichnet, dass** die Masche (48) des Gitters (47) gleich 50 µm ist.

11. Klimatisierungskreislauf (1), der eine Vorrichtung (12) nach einem der vorhergehenden Ansprüche enthält.

12. Klimatisierungskreislauf (1) nach Anspruch 11, **dadurch gekennzeichnet, dass** der Gasfilter (45) auf einem "Niederdruck"-Strömungspfad (25) angeordnet ist, der einen "Niederdruck"-Zweig (10) des inneren Wärmetauschers (5) und eine Trennzone (19) eines Kühlfluids im gasförmigen Zustand FRG und eines Kühlfluids im flüssige Zustand FRL enthält.
